# EUROPEAN PATENT APPLICATION

(11) **EP 2 644 747 A2**
(43) Date of publication of application: **02.10.2013**
(21) Application number: 13152432.4
(22) Date of filing: 23.01.2013
(51) Int. Cl.: C23C 28/00

(54) **Fiber-reinforced barrier coating, method of applying barrier coating to component and turbomachinery component**

(30) Priority: 30.03.2012 US 201213435434
(71) Applicant: General Electric Company, Schenectady, New York 12345 (US)
(72) Inventor: Taxacher, Glenn Curtis, Greenville, SC South Carolina 29615 (US); Roberts III, Herbert Chidsey, Greenville, SC South Carolina 29615 (US); Margolies, Joshua Lee, Schenectady, NY New York 12345 (US)
(74) Representative: Szary, Anne Catherine

(57) **Abstract**

A method (700) of applying a barrier coating (242) to a component (100) is provided. The method (700) includes providing (701) the component (100) and preparing (703) a slurry (250) comprising a mixture. The mixture includes about 50-90 percent by volume fraction of a barrier coating composition (242) and 10-50 percent by volume fraction of a plurality of short fibers (240). The method (700) includes applying (705) at least one layer of the slurry (250) to at least a portion of the component (100) and curing (707) the slurry (250) on the portion of the component (100) to obtain a fiber-reinforced barrier coating (200).

## Description

### FIELD OF THE INVENTION

The present invention relates generally components in power generation systems and more specifically to fiber-reinforced barrier coatings as thermal barrier coatings or erosion barrier coatings for components and methods of applying the barrier coatings to components.

### BACKGROUND OF THE INVENTION

Power generation systems, such as gas turbine engines, steam turbines, and other turbine assemblies include a compressor section for supplying a flow of compressed combustion air, a combustor section for burning fuel in the compressed combustion air, and a turbine section for extracting thermal energy from the combustion air and converting that energy into mechanical energy in the form of a rotating shaft.

Modem high efficiency combustion turbines have firing temperatures that exceed about 1,000°C, and even higher firing temperatures are expected as the demand for more efficient engines continues. Many components that form the "hot gas path" combustor and turbine sections are directly exposed to aggressive hot combustion gases, for example, the combustor liner, the transition duct between the combustion and turbine sections, and the turbine stationary vanes and rotating blades and surrounding ring segments. In addition to thermal stresses, these and other components are also exposed to mechanical stresses, loads, and erosion from particles in the hot gases that further wear on the components.

Many of the cobalt and nickel based superalloy materials traditionally used to fabricate the majority of combustion turbine components used in the hot gas path section of the combustion turbine engine are insulated from the hot gas flow by coating the components with a thermal barrier coating (TBC) in order to survive long term operation in this aggressive high temperature combustion environment.

TBC systems often consist of four layers: the metal substrate, metallic bond coat, thermally grown oxide, and ceramic topcoat. The ceramic topcoat is typically composed of yttria-stabilized zirconia (YSZ), which is desirable for having very low thermal conductivity while remaining stable at nominal operating temperatures typically seen in applications. TBCs experience degradation through various degradation modes that include mechanical rumpling of bond coat during thermal cyclic exposure, accelerated oxidation, hot corrosion, and molten deposit degradation. Even newer ceramics that are under development for thermal barrier applications, such as gadolinia stabilized zirconia, neodymia stabilized zirconia, dysprosia stabilized zirconia also experience similar degradation modes including mechanical rumpling of bond coat during thermal cyclic exposure, accelerated oxidation, hot corrosion, and molten deposit degradation. With the loss of the TBC, the component experiences much higher temperatures and the component life is reduced dramatically.

Many of the ceramic matrix composites (CMC), such as silicon-containing (SiC) or silicon nitride (Si₃N₄) substrate materials, being fabricated for use as combustion turbine components in the hot gas path section of the combustion turbine engine are protected from harmful exposure to chemical environments in the hot gas flow by coating the components with a environmental barrier coating (EBC) in order to survive long term operation in this aggressive high temperature combustion environment.

EBC systems can consist of rare earth (RE) disilicates or rare earth monosilicates, where RE=La, Ce, Pr, Nd, Sm, Eu, Gd, Th, Dy, Ho, Er, Tm, Yb, and Lu, and includes the rare earth-like elements Y and Sc. RE disilicates have a general composition of RE₂Si₂O₇, and RE monosilicates have a general composition of RE₂SiO₅. A drawback of the rare earth disilicate EBCs is that they are vulnerable to leaching of SiO₂ which creates a microporous microstructure in the EBC, and an initially dense EBC is converted to a porous layer in less than the required design lifetime. Thus, such disilicates may not have the durability required for the application. Rare earth monosilicates typically have CTEs that are not well matched to the CTE of the CMC substrate material. As a result, the monosilicate topcoats tend to crack during application, heat treatment and/or service exposure, allowing water vapor to penetrate the topcoat and cause subsurface chemical reactions and/or premature EBC spallation.

Therefore, a barrier coating, components having a barrier coating and method of applying the barrier coating that do not suffer from the above drawbacks is desirable in the art.

### SUMMARY OF THE INVENTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

According to an exemplary embodiment of the present disclosure, a method of applying a barrier coating to a component is provided. The method includes providing the component and preparing a slurry comprising a mixture. The mixture includes about 50 percent to about 90 percent by volume fraction of a barrier coating composition and about 10 percent to about 50 percent by volume fraction of a plurality of short fibers. The method includes applying at least one layer of the slurry to at least a portion of the component. The method includes curing the slurry on the portion of the component to obtain a fiber-reinforced barrier coating.

According to another exemplary embodiment of the present disclosure, a fiber-reinforced barrier coating is provided. The fiber-reinforced barrier coating includes a mixture of comprising a cured mixture of about 50 percent to about 90 percent by volume fraction of a barrier coating composition and about 10 percent to about 50 percent by volume fraction of a plurality of short fibers.

According to another exemplary embodiment of the present disclosure, a turbomachinery component is provided. The turbomachinery component includes a base material, at least one layer applied to the base material, a fiber-reinforced barrier coating applied to the at least one layer applied to the base material. The fiber-reinforced barrier coating includes about 10 percent to about 50 percent by volume fraction short fibers.

Other features and advantages of the present invention will be apparent from the following more detailed description of the preferred embodiment, taken in conjunction with the accompanying drawings which illustrate, by way of example, the principles of the invention.

### BRIEF DESCRIPTION OF THE DRAWINGS

FIG. 1 is a cross-sectional view of a power generation system of the present disclosure.
FIG. 2 is a close-up view of the component and barrier coating of FIG. 1 of the present disclosure.
FIG. 3 is a schematic view of the barrier coating of FIG. 2 having aligned fibers of the present disclosure.
FIG. 4 is a schematic view of the barrier coating of FIG. 2 having randomly oriented fibers of the present disclosure.
FIG. 5 is an alternative embodiment of the barrier coating of the present disclosure.
FIG. 6 is an alternative embodiment of the barrier coating of the present disclosure.
FIG. 7 is a flow chart of the method of applying a barrier coating to a component of the present disclosure.

Wherever possible, the same reference numbers will be used throughout the drawings to represent the same parts.

### DETAILED DESCRIPTION OF THE INVENTION

Provided is an economically viable method of coating a component with a TBC or EBC coating. One advantage is that the coating of the present disclosure is more durable and resistant to cracking. Yet another advantage is a coating that inhibits micro-cracking in the coating. Another advantage is a coating that delays or stops cracks altogether. Yet another advantage of the present disclosure is that the coating is resistant to high temperature creep at temperatures over 2000°F. Another advantage of the present disclosure is a coating that has improved or enhanced damage tolerance. Yet another advantage of the present disclosure is the ability to influence basic thermal properties of coating thereby modifying the coefficient of thermal expansion of the coating.

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

Power generation systems include, but are not limited to, gas turbines, steam turbines, and other turbine assemblies. In certain applications, power generation systems, including the turbomachinery therein (e.g., turbines, compressors, and pumps) and other machinery may include components that are exposed to heavy wear conditions. For example, certain power generation system components such as blades, casings, rotor wheels, shafts, nozzles, and so forth, may operate in high heat and high revolution environments. As a result of the extreme environmental operating conditions thermal and environmental barrier coatings are needed.

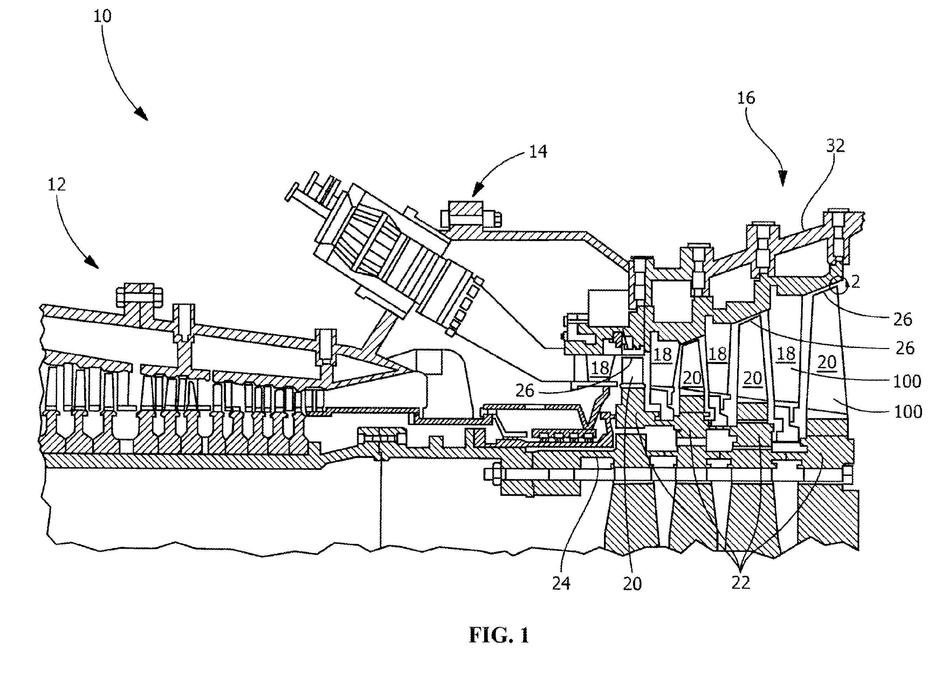

FIG. 1 shows an example of a power generation system 10, a gas turbine engine, having a compressor section 12, a combustor section 14 and a turbine section 16. In turbine section 16, there are alternating rows of stationary airfoils 18 (commonly referred to as vanes) and rotating airfoils 20 (commonly referred to as blades). Each row of blades 20 is formed by a plurality of airfoils 20 attached to a disc 22 provided on a rotor 24. Blades 20 can extend radially outward from discs 22 and terminate in a region known as a blade tip 26. Each row of vanes 18 is formed by attaching plurality of vanes 18 to a vane carrier. Vanes 18 can extend radially inward from the inner peripheral surface of vane carrier 28. Vane carrier 28 is attached to an outer casing 32, which encloses turbine section 16 of engine 10. During operation of power generation system 10, high temperature and high velocity gases flow through rows of vanes 18 and blades 20 in turbine section 16.

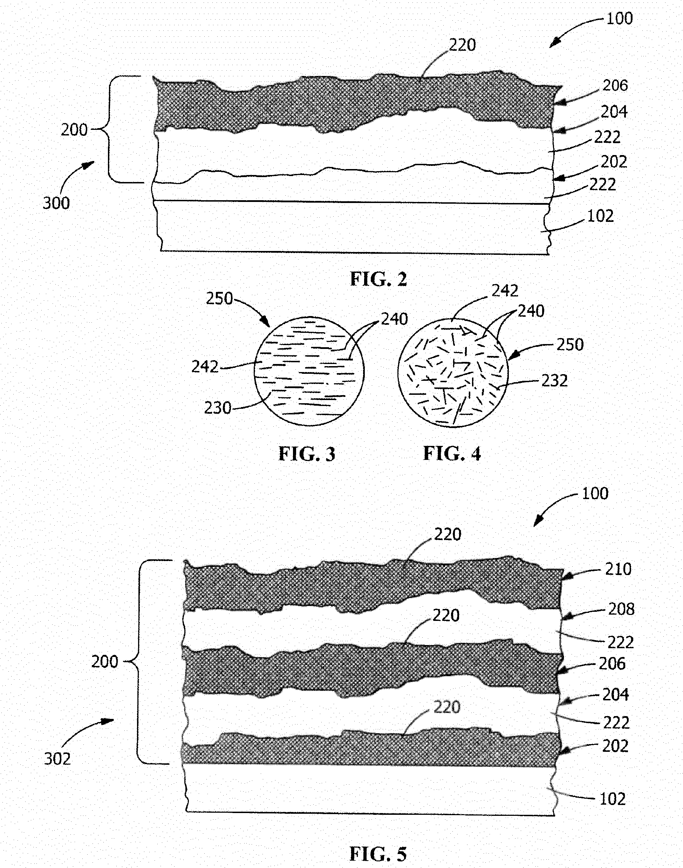

FIGS. 2 and 5 are enlarged views of a component 100 having a fiber-reinforced barrier coating 200 of the present disclosure. As shown in FIG. 2, barrier coating 200, here a thermal barrier coating (TBC), comprises a plurality of layers 202, 204, 206 applied to surface 102 of component 100. As shown in FIG. 5, barrier coating 200, here an environmental barrier coating (EBC), comprises a plurality of layers 202, 204, 206, 208, and 210 applied to surface 102 of component 100. Component 100 material is selected from any suitable materials to withstand operating temperatures and environments in turbines, such as, but not limited to, cobalt and nickel based superalloys and ceramic matrix composite components.

As shown in FIG. 2, a fiber-reinforced barrier coating 200 is applied to a component 100. Fiber-reinforced barrier coating 200 includes a plurality of layers, first layer 202, second layer 204, and third layer 206. Depending on material of component 100, at least one intermediate layer 222 is applied to surface 102 of component 100 prior to application of fiber containing layer 220. Intermediate layers 222, here first layer 202 and second layer 204 provide transition (i.e., change in coefficient of thermal expansion) from material of component 100 to fiber containing layer 220 to prevent spallation and cracking of fiber-reinforced barrier coating 200. Fiber containing layer 220 is applied as slurry 250 to intermediate layer 222. In one embodiment, when component 100 is a metal, first layer 202 is bond coating layer, second layer 204 is a thermally grown oxide layer and third layer 206 is a TBC. In another embodiment, when component 100 is a ceramic matrix composite (CMC), first layer 202 is a silicone or silicon carbide layer, second layer 204 is a BSAS-mullite blend or rare-earth di-silicate, and third layer is an EBC.

As shown in FIGS. 3 and 4, slurry 250 includes a mixture of at least approximately 50 percent by volume fraction of a barrier coating composition 242 and no more than approximately 50 percent by volume fraction of a plurality of short fibers 240, or alternatively at least approximately 75 percent by volume fraction of a barrier coating composition 242 and no more than approximately 25 percent by volume fraction of a plurality of short fibers 240, or alternatively at least approximately 90 percent by volume fraction of a barrier coating composition 242 and no more than approximately 10 percent by volume fraction of a plurality of short fibers 240. Slurry 250 is cured to provide fiber containing layer 220. Prior to curing, barrier coating composition 242 includes, but is not limited to, sintering aids (Al₂O₃, Fe₂O₃, SiO₂, for example), plasticizer, wetting/rheology agents, and combinations thereof. Suitable examples of sintering aids, include, but are not limited to Al₂O₃, Fe₂O₃, SiO₂, and combinations thereof. As shown for FIGS. 3 and 4, plurality of short fibers 240 are aligned fibers 230 (see FIG. 3) or randomly oriented fibers 232 (see FIG. 4) in slurry 250. Plurality of short fibers 240 selected from materials such as, but not limited to, silicon, carbon, silicon-carbide, rare-earth silicates, silicon nitride, alumina, silica, boron, boron carbide, poly-paraphenylene terephthalamide (KEVLAR® from DuPont), refractory materials, superalloys, S-glass, beryllium and combinations thereof. Plurality of short fibers 240 are discontinuous and are approximately 5 microns to approximately 250 microns in length, or alternatively approximately 5 microns to approximately 100 microns in length, or alternatively approximately 5 microns to approximately 75 microns in length.

As shown in FIG. 5, an alternative embodiment of fiber-reinforced barrier coating 200, here an environmental barrier coating (EBC) 302 is provided. In FIG. 5, fiber containing layer 220 is applied adjacent to surface 102 of component 100 as first layer 202. Second layer 204 is an intermediate layer 222, third layer 206 is a fiber containing layer 220, fourth layer 208 is an intermediate layer 222, and fifth layer 210 is a fiber layer 220. Fiber layers 220 are applied as slurries 250 as described above for FIG. 2. In one embodiment, fiber-reinforced barrier coating 200 is a thermal barrier coating (TBC) 300 (see FIG. 2), an environmental barrier coating (EBC) 302 (see FIG. 5) or a combination thereof. In one embodiment, prior to curing, intermediate layers of fiber-reinforced barrier coating 200 include a ceramic powder, a metal oxide powder, such as, but not limited to zirconia partially or fully stabilized by yttria, ytterbia, or other rare earth metals, such as but not limited to Lutetium, Erbium, or Gadolinium, a binder, a dispersant, and distilled water. In another embodiment, prior to curing fiber-reinforced barrier coating 200, includes a ceramic oxide powder, a binder, mullite, silicon, and barium-strontium-aluminosilicate (BSAS), rare earth silicates, such as, but not limited to, yttrium silicate, ytterbium mono or disilicate, or mixtures thereof, a dispersant, and distilled water. As shown in FIG. 5, in one embodiment, when component 100 is a metal, first layer 202, fiber containing layer 220 includes MCrAlY and fibers 240, second layer 204, which is optional, is intermediate layer 222 including MCrAlY, with or without fibers 240, third layer 204, fiber containing layer 220 is zirconium bases and fibers 240, fourth layer 208, intermediate layer 222 includes zirconium, fifth layer 210, fiber containing layer 220 includes, aluminum, aluminum-titanium, cubic boron nitride (CBN) and fibers 240. Intermediate layer 222 including zirconium can include additional elements, such as, but not limited to, halfnia, yttria, ytterbia, lanthana, and combinations thereof. In another embodiment, when component 100 is a CMC, first layer 202 is silicone or silicon carbide with or without fibers 240, second layer 204 is a BSAS-mullite blend or rare-earth di-silicate, third layer 206 is a BSAS with or without fibers 240, fourth layer 208 is a rare-earth di-silicate, and fifth layer 210 is a rare-earth mono-silicate or fiber-reinforced di-silicate.

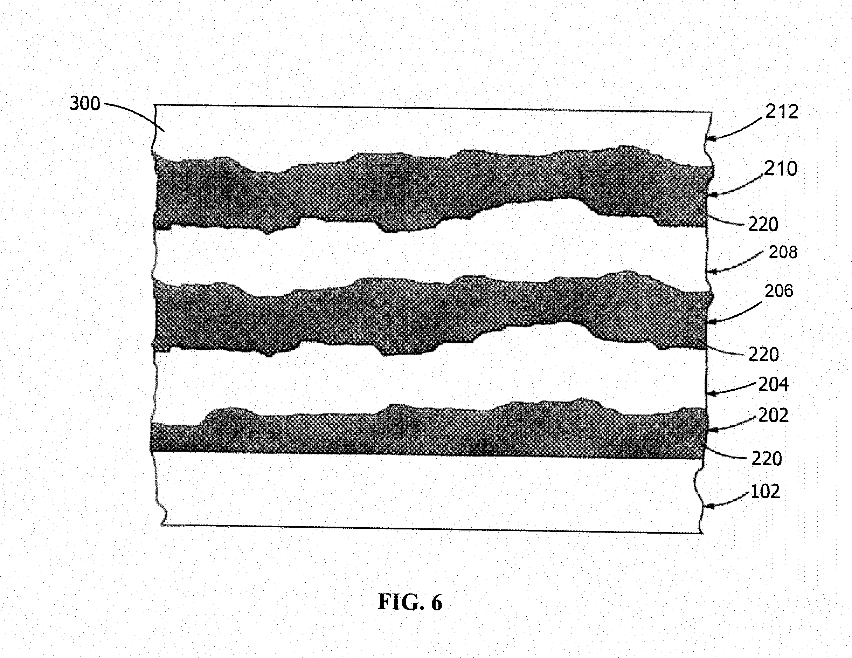

As shown in FIG. 6, an alternative embodiment of fiber-reinforced barrier coating 200 is provided. In FIG. 6, fiber containing layer 220 is applied adjacent to surface 102 of component 100 as first layer 202. Second layer 204 is an intermediate layer 222, third layer 206 is a fiber containing layer 220, fourth layer 208 is an intermediate layer 222, fifth layer 210 is a fiber layer 220, and sixth layer 212 is a TBC. Fiber layers 220 are applied as slurries 250 as described above for FIG. 2. In one embodiment, fiber-reinforced barrier coating 200 is a thermal barrier coating (TBC) 300 (see FIG. 2), an environmental barrier coating (EBC) 302 (see FIG. 5) or a combination thereof. In one embodiment, prior to curing, intermediate layers of fiber-reinforced barrier coating 200 include a ceramic powder, a metal oxide powder, such as, but not limited to zirconia partially or fully stabilized by yttria, ytterbia, or other rare earth metals, such as but not limited to Lutetium, Erbium, or Gadolinium, a binder, a dispersant, and distilled water. In another embodiment, prior to curing fiber-reinforced barrier coating 200, includes a ceramic oxide powder, a binder, mullite, silicon, and barium-strontium-aluminosilicate (BSAS), rare earth silicates, such as, but not limited to, yttrium silicate, ytterbium mono or disilicate, or mixtures thereof, a dispersant, and distilled water. In one embodiment, when component 100 is a metal, first layer 202, fiber containing layer 220 includes MCrAlY and fibers 240, second layer 204, which is optional, is intermediate layer 222 including MCrAlY, with or without fibers 240, third layer 204, fiber containing layer 220 is zirconium based and fibers 240, fourth layer 208, intermediate layer 222 includes zirconium , fifth layer 210, fiber containing layer 220 includes, aluminum, aluminum-titanium, CBN, and fibers 240. Intermediate layer 222 including zirconium can include additional oxides, such as, but not limited to, halfnia, yttria, ytterbia, lanthana, and combinations thereof.

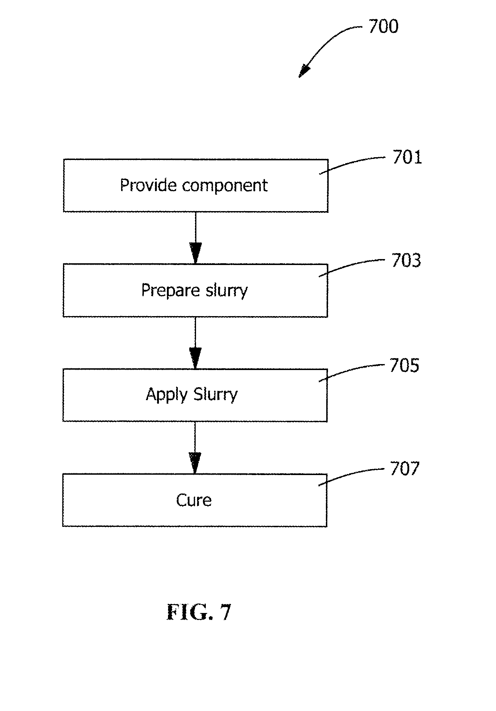

FIG. 7 is a flow chart describing a method 700 of applying fiber-reinforced barrier coating 200 to component 100 outlined in FIGS. 2 and 5 above. Method 600 includes providing component 100, step 601. Method 600 includes preparing slurry 250 (see FIGS. 3 and 4), step 603. Slurry 250 is a mixture of at least approximately 75 percent by volume fraction of barrier coating composition 242 and no more than approximately 25 percent by volume fraction of a plurality of short discontinuous fibers 240 (see FIGS. 3 and 4). Slurry 250 is applied to surface 102 of component 100 (see FIG. 5) or applied to first layer 202, an intermediate layer 222 (see FIG. 2), step 605. Slurry 250 and layers 202, 204, 206, 208, and 210 are applied using any method, such as but not limited to, dipping, spraying, tape casting, thermal spraying, and plasma spraying slurry onto component 100. After the desired number of layers 202, 204, 206, 208, 210 (see FIGS. 2 and 5) are applied to surface 102 of component 100, layers are cured via heat treatment using an ambient or controlled atmosphere, variable pressure, high temperature furnace cycle to form fiber-reinforced barrier coating 200, step 607. Fiber-reinforced barrier coating 200 is a thermal barrier coating, an environmental barrier coating, or a combination thereof.

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A method (700) of applying a barrier coating (200) to a component (100) comprising:
providing (701) the component (100);
preparing (703) a slurry (250) comprising a mixture of the following:
about 50 percent to about 90 percent by volume fraction of a barrier coating composition (242); and
about 10 percent to about 50 percent by volume fraction of a plurality of short fibers (240);
applying (705) at least one layer of the slurry (242) to at least a portion of the component (100); and
curing (707) the slurry (250) on the portion of the component (100) to obtain a fiber-reinforced barrier coating (200).

2. The method (700) of claim 1, wherein the fiber-reinforced barrier coating (200), prior to curing (707), includes a ceramic powder, a metal oxide powder, a binder, a dispersant, and distilled water.

3. The method (700) of claim 1, wherein the fiber-reinforced barrier coating (200), prior to curing (707), includes a ceramic oxide powder, a binder, mullite, silicon, and barium-strontium-aluminosilicate (BSAS), rare earth silicates, a dispersant, and distilled water.

4. The method (700) of any preceding claim, wherein the component (100) is a ceramic matrix composite component or a metallic component.

5. The method (700) of any preceding claim, wherein the fiber-reinforced barrier coating (200) is a thermal barrier coating (300), an environmental barrier coating (302), and a combination thereof.

6. The method of any preceding claim, wherein the plurality of short fibers (240) are selected from the group consisting of silicon, carbon, silicon-carbide, rare-earth silicates, silicon nitride, alumina, silica, boron, boron carbide, poly-paraphenylene terephthalamide, refractory materials, superalloys, S-glass, beryllium and combinations thereof.

7. The method (700) of any preceding claim, wherein the plurality of short (240) fibers are discontinuous and approximately 5 microns to approximately (250) microns in length.

8. The method (700) of any preceding claim, wherein the short fibers (240) are aligned in the slurry (250).

9. The method (700) of any one of claims 1 to 7, wherein the short fibers (240) are randomly orientated (232) in the slurry (250).

10. A fiber-reinforced barrier coating (200) comprising a cured mixture of:
about 50 percent to about 90 percent by volume fraction of a barrier coating composition (242); and
about 10 percent to about 50 percent by volume fraction of a plurality of short fibers (240).

11. The fiber-reinforced barrier coating (200) of claim 10, wherein the plurality of short fibers (240) are selected from the group consisting of silicon, carbon, silicon-carbide, rare-earth silicates, silicon nitride, alumina, silica, boron, boron carbide, poly-paraphenylene terephthalamide, refractory materials, superalloys, S-glass, beryllium and combinations thereof.

12. The fiber-reinforced barrier coating (200) of claim 10 or claim 11, wherein the short fibers (240) are aligned (230) in the barrier coating (242).

13. The fiber-reinforced barrier coating (200) of claim 10 or claim 11, wherein the short fibers (240) are randomly orientated (232) in the barrier coating (242).

14. A turbomachinery component (100) comprising:
a base material (102);
at least one layer applied to the base material (102); and
a fiber-reinforced barrier coating (200) applied to the at least one layer applied to the base material (102), wherein the fiber-reinforced barrier coating (200) includes about 10 percent to about 50 percent by volume fraction of short fibers (240).

15. The turbomachinery component (100) of claim 14, wherein the fiber-reinforced barrier coating (200) is a thermal barrier coating (300), an environmental barrier coating (302), and a combination thereof.
